# EUROPEAN PATENT SPECIFICATION

(11) **EP 2 401 529 B1**
(45) Date of publication and mention of the grant of the patent: **21.03.2018**
(21) Application number: 10746870.4
(22) Date of filing: 26.02.2010
(51) Int. Cl.: F16J 1/08, F02F 1/20, F01M 7/00

(54) **PISTON WITH CENTRAL DIRECTIONAL OIL FLOW AND WRIST PIN LUBRICATION FEATURE AND METHOD OF CONSTRUCTION THEREOF**
KOLBEN MIT ZENTRALEM DIREKTIONALEM ÖLFLUSS UND KOLBENBOLZENSCHMIERUNG SOWIE HERSTELLUNGSVERFAHREN DAFÜR
PISTON AVEC UN FLUX D'HUILE DIRECTIONNEL CENTRAL ET UN ÉLÉMENT DE LUBRIFICATION DE L'AXE DE PISTON ET PROCÉDÉ DE CONSTRUCTION CORRESPONDANT

(30) Priority: 27.02.2009 US 155945 P
(43) Date of publication of application: 04.01.2012
(73) Proprietor: Federal-Mogul Corporation, Southfield, MI 48033 (US)
(72) Inventor: RIBEIRO, Carmo, Ann Arbor MI 48103 (US)
(74) Representative: Hoffmann Eitle
(86) International application number: PCT/US2010/025484
(87) International publication number: WO 2010/099372

(56) References cited:
- WO-A1-00/53913
- WO-A1-02/20971
- WO-A1-2006/060987
- WO-A1-2007/068222
- DE-A1- 3 707 462
- JP-A- 4 276 119
- US-A- 4 517 930

## Description

### CROSS-REFERENCE TO RELATED APPLICATION

This application claims the benefit of U.S. Provisional Application Serial No. 61/155,945, filed February 27, 2009.

### BACKGROUND OF THE INVENTION

### 1. Technical Field

This invention relates generally to pistons for internal combustion engines, and more particularly to pistons having wrist pin lubrication features.

### 2. Related Art

Piston constructions having one or two (dual gallery) generally closed oil cooling galleries are known. Dual gallery pistons have an annular, radially outer gallery and a central gallery formed between upper and lower crown portions, wherein the central gallery is typically formed as an open gallery beneath the combustion bowl wall. The outer and central galleries can be isolated from one another or in fluid communication with one another via oil passages. In addition, it is known to provide pin lubrication passages extending from one or both of the galleries to a wrist pin. The lubrication passages can extend into a wrist pin bore of a pin boss and/or through an opening in a lower inner gallery floor between laterally spaced pin bosses. The outer gallery is particularly effective in cooling an outer ring belt region of the piston, while the central gallery is particularly effective in cooling a central crown region, formed in part by an upper combustion wall, which is directly exposed to hot combustion gasses. Although these gallery constructions are generally effective in cooling the piston, the oil flow dynamics through the galleries can be improved, with particular regard to the central gallery, thereby enhancing the ability to cool pistons in use.

Furthermore, a two-piece piston for an internal combustion engine is disclosed in WO 2007/068222 A1, which piston has a top part having a bolt with an external thread on the underside of its piston crown and having a bottom part which is connected to the top part by means of a nut screwed onto the bolt. Moreover, US 4,517,930 B teaches a piston provided for an internal combustion engine, having a crown portion comprising an upper part and a lower or ring-bearing part which two parts are of different materials welded together. WO 2007/06822 discloses a two-piece piston having a top part and a bottom part which are connected by a nut and a compression sleeve.

### SUMMARY OF THE INVENTION

A piston has a piston body with a central axis along which the piston body reciprocates within a cylinder bore. The piston body has an upper crown portion with an upper combustion wall against which combustion forces directly act in the cylinder bore and an at least one annular upper rib depending from the upper combustion wall to a free end. The piston body further includes a lower crown portion having at least one annular lower rib extending to a free end that is fixed to the at least one upper rib. The lower crown portion further includes an inner gallery floor extending radially inwardly relative to the at least one lower rib and a pair of pin bosses depending generally from the inner gallery floor with a space provided between the pin bosses for receipt of a small end of a connecting rod. The upper crown portion has an upper post depending from the upper combustion wall along the central axis to a free end. The lower crown portion has a lower post extending upwardly from the inner gallery floor along the central axis to a free. The free end of the upper post and the free end of the lower post form a labyrinth passage.

In accordance with another aspect of the invention, the upper and lower post extend axially beyond one another and maintain entire clearance with one another.

In accordance with another aspect of the invention, the lower crown post has an oil flow passage extending along the central axis.

In accordance with another aspect of the invention, the lower crown post has an oil flow passage extending substantially transversely to the central axis.

In accordance with another aspect of the invention, a method of constructing a piston is provided. The method includes providing an upper crown portion having an upper combustion wall against which combustion forces directly act in the cylinder bore and at least one annular upper rib depending from the upper combustion wall to a free end with an upper post depending from the upper combustion wall along the central axis to a free end. Further, providing a lower crown portion having at least one annular lower rib extending to a free end and an inner gallery floor extending radially inwardly relative to the at least one lower rib with a pair of pin bosses spaced for receipt of a small end of a connecting rod and having a lower post extending upwardly from the inner gallery floor along the central axis to a free end. Then, fixing the at least one upper rib of the upper crown portion to the at least one lower rib of the lower crown portion and forming a labyrinth passage between the free end of the upper post and the free end of the lower post.

In accordance with another aspect of the invention, the method includes extending the free end of the upper post and the free end of the lower post axially beyond one another.

In accordance with another aspect of the invention, the method includes maintaining the upper post and the lower post in spaced relation from one another.

### BRIEF DESCRIPTION OF THE DRAWINGS

These and other aspects, features and advantages of the invention will become more readily appreciated when considered in connection with the following detailed description of presently preferred embodiments and best mode, appended claims and accompanying drawings, in which:
Figure 1 is a partial cross-sectional view of a piston constructed in accordance with one presently preferred aspect of the invention; and
Figure 2 is a partial cross-sectional view showing a central gallery portion of a piston constructed in accordance with another presently preferred aspect of the invention.

### DETAILED DESCRIPTION OF PRESENTLY PREFERRED EMBODIMENTS

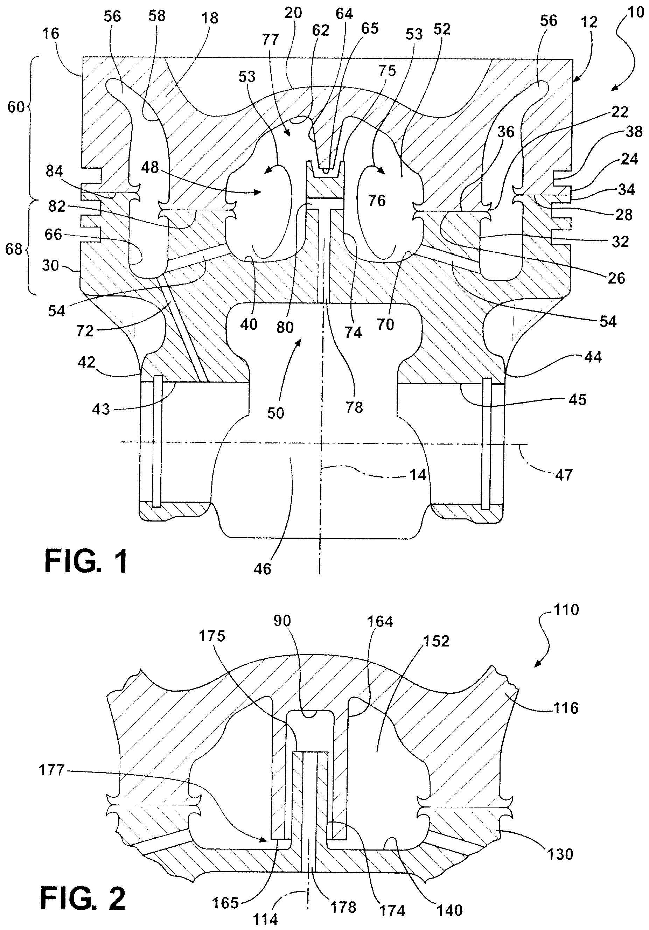

Referring in more detail to the drawings, Figure 1 illustrates a piston 10 constructed in accordance with one presently preferred aspect of the invention. The piston 10 has a piston body 12, such as can be constructed of steel, for example, extending along a central axis 14 along which the piston body 12 reciprocates within a cylinder bore (not shown). The piston body 12 includes an upper crown portion 16 having an upper combustion wall 18, represented here, by way of example and without limitation, as providing a recessed combustion bowl 20, against which combustion forces directly act in the cylinder bore. The upper crown portion 16 has at least one, and shown here as a pair of annular upper ribs, referred to hereafter as an upper inner rib 22 and upper outer rib 24, depending generally from the upper combustion wall 18 to respective free ends 26, 28. The piston body 12 further includes a lower crown portion 30 having at least one, and shown here as a pair of annular lower ribs, referred to hereafter as a lower inner rib 32 and lower outer rib 34, extending to respective free ends 36, 38 arranged in circumferential alignment and in fixed engagement with the upper free ends 26, 28. The lower crown portion 30 further includes an inner gallery floor 40 extending radially inwardly relative to the lower inner rib 32 and a pair of pin bosses 42, 44 depending generally from the inner gallery floor 40. The pin bosses 42, 44 have respective pin bores 43, 45 aligned along a central horizontal pin axis 47 with a space 46 provided between the pin bosses 42, 44 for receipt of a small end of a connecting rod (not shown). The upper and lower crown portions 16, 30 interact to provide a central directional oil flow control member extending coaxially along the central axis 14, referred to hereafter as oil flow control member 48, having a central wrist pin lubrication feature, referred to hereafter as lubrication feature 50. The flow control member 48 extends through an inner gallery, also referred to as central gallery 52 of the piston 10, thereby providing the central gallery 52 having a toroid configuration. As such, the oil received in the central gallery 52 is caused to flow along a predetermined dynamic flow path indicated generally by the arrows 53. Accordingly, the oil is directed to flow along a generally continuous, uniform path throughout the central gallery 52, thereby facilitating uniform, efficient cooling the upper combustion wall 18. In addition, the lubrication feature 50 provides a regulated or metered flow of the oil from within the central gallery 52 to the space 46, thereby avoiding overheating ("cooking") the oil within the central gallery 52 and promoting continuous lubrication of the wrist pin joint at the small end of the connecting rod.

The upper crown portion 16 is formed having an annular outer oil gallery pocket 58 extending from the inner and outer upper rib free ends 26, 28 upwardly into an upper ring belt region 60 adjacent the upper combustion wall 18. The upper crown portion 16 is also formed having an annular inner oil gallery pocket 62 extending from the upper inner rib free end 26 upwardly and immediately beneath the combustion bowl 20. In addition, the upper crown portion 16 has an upper post 64 depending coaxially along the central axis 14 from the upper combustion wall 18. The upper post 64 forms a portion of the flow control member 48 and is formed having a predetermined length extending to a free end 65 and a predetermined outer surface configuration.

The lower crown portion 30 is constructed having an annular outer oil gallery pocket 66 extending from the inner and outer lower rib free ends 36, 38 downwardly into a lower ring belt region 68, which, in combination with the upper outer oil gallery pocket 58 forms an outer gallery 56. The lower crown portion 30 also has an annular inner oil gallery pocket 70 extending from the inner lower rib free end 36 downwardly, which, in combination with the upper inner oil gallery pocket 62 forms the central gallery 52. An oil flow passage 72 is formed extending from one of the pin bores 43 upwardly into the bottom most region of the outer oil gallery pocket 66. As such, oil is pumped from the pin bore 43 upwardly into the outer gallery 56. Further, lower crown portion 30 is represented here as having a pair of oil flow passages 54 extending through the lower inner rib 32. The oil flow passages 54 are formed, by way of example and without limitation, descending generally from a lowermost region of the central gallery 52 radially outwardly to a lower most region the outer gallery 56. In addition, the lower crown portion 30 has a lower post 74 that forms a portion of the flow control member 48. The lower post 74 extends upwardly from the inner gallery floor 40 coaxially along the central axis 14 in coaxial alignment with the upper post 64. The lower post 74 is formed having a predetermined length and outer surface configuration extending to a free end 75. The length and outer surface configuration are such that upon fixing the upper crown portion 16 to the lower crown portion 30, such as via friction welding, for example, the free end 65 of the upper post 64 do not interfere with one another. In the embodiment illustrated, by way of example and without limitation, a counter bore 76 is formed in one of the posts 64, 74, and shown here, by way of example and without limitation, as being formed in the lower post 74, to receive the free end 65 of the upper post 64 in a clearance fit therein. The counterbore 76 has a diameter larger than the outer diameter of the upper post 64 and a depth great enough to provide a clearance between the upper post 64 and the lower post 74. As such, upon fixing the upper crown portion 16 to the lower crown portion 30, a labyrinth seal 77 having a serpentine flow path is established between the upper post 64 and the lower post 74. Accordingly, the upper post 64 and lower post 74 remain detached and spaced radially and entirely from one another, though the upper post free end 65 and the lower post free end 75 extend axially beyond one another. As such, the upper and lower posts 64, 74 do not having any affect on the ability to fix the upper crown portion 16 to the lower crown portion 30.

The lower post 74 further includes the lubrication feature 50, shown here, by way of example and without limitation, as being generally T-shaped, as viewed in axial cross-section, having a vertically extending first oil flow passage, also referred to as a central oil flow passage 78, extending coaxially along the central axis 14. The oil flow passage 78 is intersected by a horizontally extending second oil flow passage, also referred to as cross opening 80, below the counterbore 76, with the cross opening 80 extending generally transversely to the central axis 14 through the lower post 50 to diametrically opposite sides of the annular central gallery 52. The height of the cross opening 80 can be varied in manufacture as desired to provide the desired regulation of oil flow through the oil flow passage 78, and to facilitate establishing a predetermined depth or pool of oil in the lower portion of the central gallery 52. The oil within the central gallery 52 flows through the oil flow passage 78 to facilitate lubricating the wrist pin joint formed at the small end of the connecting rod (not shown).

In accordance with a method of construction of the piston 10, as eluded to above, the method includes forming the respective upper and lower crown portions 16, 30 and fixing them to one another, such as via forming respective friction weld joints 82, 84 between the inner rib free ends 26, 36 and the outer rib free ends 28, 38, for example. While forming the friction weld joints 82, 84, the upper post 64 and the lower post 74 remain entirely spaced from one another, though the respective free ends 65, 75 are caused to extend axially beyond one another, thereby forming the labyrinth seal passage 77 extending between the upper and lower posts 64, 74. Accordingly, with the upper post 64 and lower post 74 being entirely spaced from one another, they have no affect on the friction welding process.

In Figure 2, portion of a piston 110 is shown constructed in accordance with another aspect of the invention, wherein the same reference numerals as used above, offset by a factor of 100, are used to identify like features. The piston 110 has an upper crown portion 116 fixed to a lower crown portion 130, such as via a friction welding process, as described above. The notable difference with the piston 110 is in the configuration of an upper post 164 and a lower post 174. The upper post 164 depends coaxially along a central axis 114 over a predetermined length from an upper combustion wall 118 to a free end 165 and has recessed pocket 90 extending upwardly into the free end 165 along the central axis 114 therein. The pocket 90 is constructed having a predetermined depth to a blind bottom surface, shown here, by way of example and with limitation, as extending to, or substantially to the upper combustion wall 118. Further, the pocket 90 has a predetermined diameter to receive the lower post 174 in clearance fit therein. Accordingly, a labyrinth seal passage 177 is established between the upper and lower posts 164, 174.

The lower post 174 extends coaxially upwardly along the central axis 114 a predetermined distance from an inner gallery floor 140 of the lower crown portion 130 to a free end 175. The lower post has an oil flow passage 178 formed as a central through passage extending coaxially along the central axis 114 through the free end 175. The lower post 174 is constructed having a predetermined length to remained axially spaced from the blind bottom surface of the pocket 90 and outer surface configuration or diameter to maintain a clearance fit within the pocket 90 of the upper post 164, while the free end 165 of the upper post 164 remains axially spaced from the inner gallery floor 140, thereby forming the serpentine labyrinth seal passage 177. The height of the lower post 174 can be varied in manufacture as desired to provide the desired clearance relative to the blind bottom surface of the pocket 90, thereby allowing the rate of oil flow through the oil flow passage 178 to be regulated, and further allowing a predetermined depth or pool of oil to be substantially maintained in a lower portion of a central gallery 152. Further, the diameter and radial width of the oil flow passage 178 can be sized to provide the desired flow rate of oil therethrough, thereby regulating the degree of oil heating within the central gallery 152, and thus, controlling the cooling of the piston 110. As with the previous embodiment, the upper post 164 and lower post 174 have no affect on the friction welding process.

Obviously, many modifications and variations of the present invention are possible in light of the above teachings. It is, therefore, to be understood that within the scope of the appended claims, the invention may be practiced otherwise than as specifically described.

## Claims

1. A piston, comprising:
a piston body (12) having a central axis along which said piston body reciprocates within a cylinder bore, said piston body having an upper crown portion (16) having an upper combustion wall (18) against which combustion forces directly act in the cylinder bore and at least one annular upper rib (22, 24) depending from the upper combustion wall to a free end, said piston body further including a lower crown portion (30) having at least one annular lower rib (32, 34) extending to a free end fixed to said at least one annular upper rib (22, 24), said lower crown portion (30) having an inner gallery floor (40) extending radially inwardly relative to said at least one annular lower rib (32, 34) and a pair of pin bosses (42, 44) depending generally from said inner gallery floor (40) with a space provided between said pin bosses for receipt of a small end of a connecting rod;
said upper crown portion (16) having an upper post (64) depending from said upper combustion wall (18) along said central axis to a free end (65);
said lower crown portion (30) having a lower post (74) extending upwardly from said inner gallery floor (40) along said central axis to a free end (75); **characterised in that** said free end (65) of said upper post (64) and said free end (75) of said lower post (74) form a labyrinth passage.

2. The piston of claim 1 wherein said free end (65) of said upper post and said free end (75) of said lower post extend axially beyond one another.

3. The piston of claim 2 wherein said upper post (64) and said lower post (74) are spaced radially from one another.

4. The piston of claim 1 wherein a pocket (90) extends axially into said free end (65) of said upper post and said free end (75) of said lower post extends axially into said pocket.

5. The piston of claim 1 wherein said free end of said lower post has a counterbore (76) and said free end (65) of said upper post extends axially into said counterbore (76).

6. The piston of claim 1 wherein said lower post (74) has a first oil flow passage (78) extending along said central axis.

7. The piston of claim 6 wherein said first oil flow passage (78) extends through said free end (75) of said lower post.

8. The piston of claim 6 wherein said lower post (74) has a second oil flow passage (80) extending transverse to said central axis, said second oil flow passage (80) intersecting said first oil flow passage (78).

9. A method of constructing a piston, comprising:
providing an upper crown portion (16) having an upper combustion wall (18) against which combustion forces directly act in the cylinder bore and at least one annular upper rib (22, 24) depending from the upper combustion wall to a free end with an upper post (64) depending from the upper combustion wall along the central axis to a free end (65);
providing a lower crown portion (30) having at least one annular lower rib (32, 34) extending to a free end and an inner gallery floor (40) extending radially inwardly relative to the at least one lower rib with a pair of pin bosses (42, 44) spaced for receipt of a small end of a connecting rod and having a lower post (74) extending upwardly from the inner gallery floor along the central axis to a free end (75); and
fixing the at least one upper rib (22, 24) of the upper crown portion to the at least one lower rib (32, 34) of the lower crown portion and forming a labyrinth passage between the free end (65) of the upper post and the free end (75) of the lower post.

10. The method of claim 9 further including extending the free end (65) of the upper post and the free end (75) of the lower post axially beyond one another.

11. The method of claim 10 further including maintaining the upper post (64) and the lower post (74) in spaced relation from one another.

12. The method of claim 9 further including forming a pocket (90) extending axially into the free end (65) of the upper post and extending the free end (75) of the lower post axially into the pocket.

13. The method of claim 9 further including forming a counterbore (76) in the free end (75) of the lower post and extending the free end (65) of the upper post axially into the counterbore (76).

14. The method of claim 9 further including forming a first oil flow passage (78) extending along the central axis in the lower post.

15. The method of claim 14 further including forming a second oil flow passage (80) extending transverse to the central axis and intersecting the first oil flow passage (78) with the second oil flow passage.

## Patentansprüche

1. Kolben, umfassend:
einen Kolbenkörper (12), der eine Mittelachse aufweist, entlang welcher der Kolbenkörper sich innerhalb einer Zylinderbohrung reziprok bewegt, wobei der Kolbenkörper einen oberen Kronenbereich (16), der eine obere Verbrennungswand (18) aufweist, gegen die Verbrennungskräfte in der Zylinderbohrung direkt wirken, und mindestens eine ringförmige oberen Rippe (22, 24), die von der oberen Verbrennungswand zu einem freien Ende herabhängt, aufweist, wobei der Kolbenkörper weiter einen unteren Kronenbereich (30) beinhaltet, der mindestens eine ringförmige untere Rippe (32, 34) aufweist, die sich zu einem freien Ende erstreckt, das an der mindestens einen ringförmigen oberen Rippe (22, 24) fixiert ist, wobei der untere Kronenbereich (30) einen inneren Galerieboden (40), der sich relativ zu der mindestens einen ringförmigen unteren Rippe (32, 34) radial nach innen erstreckt, und ein Paar von Bolzenaugen (42, 44), die allgemein von dem inneren Galerieboden (40) herabhängen, aufweist, wobei ein Raum zwischen den Bolzenaugen bereitgestellt ist, um ein kleines Ende einer Verbindungsstange aufzunehmen;
wobei der obere Kronenbereich (16) einen oberen Pfosten (64) aufweist, der von der oberen Verbrennungswand (18) entlang der Mittelachse zu einem freien Ende (65) herabhängt;
wobei der untere Kronenbereich (30) einen unteren Pfosten (74) aufweist, der sich von dem inneren Galerieboden (40) entlang der Mittelachse zu einem freien Ende (75) nach oben erstreckt;
**dadurch gekennzeichnet, dass**
das freie Ende (65) des oberen Pfostens (64) und das freie Ende (75) des unteren Pfostens (74) einen Labyrinth-Durchgang bilden.

2. Kolben nach Anspruch 1, wobei das freie Ende (65) des oberen Pfostens und das freie Ende (75) des unteren Pfostens sich axial über einander hinaus erstrecken.

3. Kolben nach Anspruch 2, wobei der obere Pfosten (64) und der untere Pfosten (74) radial voneinander beabstandet sind.

4. Kolben nach Anspruch 1, wobei eine Tasche (90) sich axial in das freie Ende (65) des oberen Pfostens hinein erstreckt, und das freie Ende (75) des unteren Pfostens sich axial in die Tasche hinein erstreckt.

5. Kolben nach Anspruch 1, wobei das freie Ende des unteren Pfostens eine Gegenbohrung (76) aufweist und das freie Ende (65) des oberen Pfostens sich axial in die Gegenbohrung (76) hinein erstreckt.

6. Kolben nach Anspruch 1, wobei der untere Pfosten (74) einen ersten Ölflussdurchgang (78) aufweist, der sich entlang der Mittelachse erstreckt.

7. Kolben nach Anspruch 6, wobei der erste Ölflussdurchgang (78) sich durch das freie Ende (75) des unteren Pfostens erstreckt.

8. Kolben nach Anspruch 6, wobei der untere Pfosten (74) einen zweiten Ölflussdurchgang (80) aufweist, der sich quer zu der Mittelachse erstreckt, wobei der zweite Ölflussdurchgang (80) den ersten Ölflussdurchgang (78) schneidet.

9. Verfahren zum Herstellen eines Kolbens, umfassend:
Bereitstellen eines oberen Kronenbereichs (16) mit einer oberen Verbrennungswand (18), gegen die Verbrennungskräfte in der Zylinderbohrung direkt wirken, und mindestens einer ringförmigen oberen Rippe (22, 24), die von der oberen Verbrennungswand zu einem freien Ende herabhängt, wobei ein oberer Pfosten (64) von der oberen Verbrennungswand entlang der Mittelachse zu einem freien Ende (65) herabhängt;
Bereitstellen eines unteren Kronenbereichs (30), der mindestens eine ringförmige untere Rippe (32, 34), die sich zu einem freien Ende erstreckt, und einen inneren Galerieboden (40), der sich relativ zu der mindestens einen unteren Rippe radial nach innen erstreckt, aufweist, wobei ein Paar von Bolzenaugen (42, 44) beabstandet wird, um ein kleines Ende einer Verbindungsstange aufzunehmen, und der einen unteren Pfosten (74) aufweist, der sich von dem inneren Galerieboden entlang der Mittelachse zu einem freien Ende (75) nach oben erstreckt; und
Fixieren der mindestens einen oberen Rippe (22, 24) des oberen Kronenbereichs an der mindestens einen unteren Rippe (32, 34) des unteren Kronenbereichs und Bilden eines Labyrinth-Durchgangs zwischen dem freien Ende (65) des oberen Pfostens und das freie Ende (75) des unteren Pfostens.

10. Verfahren nach Anspruch 9, weiter beinhaltend das Erstecken des freien Endes (65) des oberen Pfostens und des freien Endes (75) des unteren Pfostens axial über einander hinaus.

11. Verfahren nach Anspruch 10, weiter beinhaltend das Halten des oberen Pfostens (64) und des unteren Pfostens (74) in voneinander beabstandeter Beziehung.

12. Verfahren nach Anspruch 9, weiter beinhaltend das Bilden einer Tasche (90), die sich axial in das freie Ende (65) des oberen Pfostens hinein erstreckt, und Erstrecken des freien Endes (75) des unteren Pfostens axial in die Tasche hinein.

13. Verfahren nach Anspruch 9, weiter beinhaltend das Bilden einer Gegenbohrung (76) in dem freien Ende (75) des unteren Pfostens, und Erstrecken des freien Endes (65) des oberen Pfostens sich axial in die Gegenbohrung (76) hinein.

14. Verfahren nach Anspruch 9, weiter beinhaltend das Bilden eines ersten Ölflussdurchgangs (78), der sich entlang der Mittelachse in dem unteren Pfosten erstreckt.

15. Verfahren nach Anspruch 14, weiter beinhaltend das Bilden eines zweiten Ölflussdurchgangs (80), der sich quer zu der Mittelachse erstreckt, und Schneiden des ersten Ölflussdurchgangs (78) mit dem zweiten Öldurchgang.

## Revendications

1. Piston, comprenant :
un corps de piston (12) ayant un axe central le long duquel ledit corps de piston effectue un mouvement de va-et-vient à l'intérieur d'un alésage de cylindre, ledit corps de piston ayant une portion de couronne supérieure (16) ayant une paroi de combustion supérieure (18) contre laquelle des forces de combustion agissent directement dans l'alésage de cylindre et au moins une nervure supérieure annulaire (22, 24) dépendant de la paroi de combustion supérieure à une extrémité libre, ledit corps de piston incluant en outre une portion de couronne inférieure (30) ayant au moins une nervure inférieure annulaire (32, 34) s'étendant d'une extrémité libre fixée à ladite au moins une nervure supérieure annulaire (22, 24), ladite portion de couronne inférieure (30) ayant un plancher de galerie interne (40) s'étendant radialement vers l'intérieur par rapport à ladite au moins une nervure inférieure annulaire (32, 34) et une paire de bossages d'axe (42, 44) dépendant généralement dudit plancher de galerie interne (40) avec un espace fourni entre lesdits bossages d'axe pour la réception d'une petite extrémité d'une tige de liaison ;
ladite portion de couronne supérieure (16) ayant un montant supérieur (64) dépendant de ladite paroi de combustion supérieure (18) le long dudit axe central à une extrémité libre (65) ;
ladite portion de couronne inférieure (30) ayant un montant inférieur (74) s'étendant vers le haut dudit plancher de galerie interne (40) le long dudit axe central à une extrémité libre (75) ;
**caractérisé en ce que**
ladite extrémité libre (65) dudit montant supérieur (64) et ladite extrémité libre (75) dudit montant inférieur (74) forment un passage en labyrinthe.

2. Piston selon la revendication 1, dans lequel ladite extrémité libre (65) dudit montant supérieur et ladite extrémité libre (75) dudit montant inférieur s'étendent axialement au-delà l'un de l'autre.

3. Piston selon la revendication 2, dans lequel ledit montant supérieur (64) et ledit montant inférieur (74) sont espacés radialement l'un de l'autre.

4. Piston selon la revendication 1, dans lequel une poche (90) s'étend axialement à l'intérieur de ladite extrémité libre (65) dudit montant supérieur et ladite extrémité libre (75) dudit montant inférieur s'étend axialement à l'intérieur de ladite poche.

5. Piston selon la revendication 1, dans lequel ladite extrémité libre dudit montant inférieur a un contre-alésage (76) et ladite extrémité libre (65) dudit montant supérieur s'étend axialement à l'intérieur dudit contre-alésage (76).

6. Piston selon la revendication 1, dans lequel ledit montant inférieur (74) a un premier passage d'écoulement d'huile (78) s'étendant le long dudit axe central.

7. Piston selon la revendication 6, dans lequel ledit premier passage d'écoulement d'huile (78) s'étend à travers ladite extrémité libre (75) dudit montant inférieur.

8. Piston selon la revendication 6, dans lequel ledit montant inférieur (74) a un second passage d'écoulement d'huile (80) s'étendant transversalement audit axe central, ledit second passage d'écoulement d'huile (80) croisant ledit premier passage d'écoulement d'huile (78).

9. Procédé de construction d'un piston, comprenant :
la fourniture d'une portion de couronne supérieure (16) ayant une paroi de combustion supérieure (18) contre laquelle des forces de combustion agissent directement dans l'alésage de cylindre et au moins une nervure supérieure annulaire (22, 24) dépendant de la paroi de combustion supérieure à une extrémité libre avec un montant supérieur (64) dépendant de la paroi de combustion supérieure le long de l'axe central à une extrémité libre (65) ;
la fourniture d'une portion de couronne inférieure (30) ayant au moins une nervure inférieure annulaire (32, 34) s'étendant jusqu'à une extrémité libre et un plancher de galerie interne (40) s'étendant radialement vers l'intérieur par rapport à l'au moins une nervure inférieure avec une paire de bossages d'axe (42, 44) espacés pour la réception d'une petite extrémité d'une tige de liaison et ayant un montant inférieur (74) s'étendant vers le haut du plancher de galerie interne le long de l'axe central à une extrémité libre (75) ; et
la fixation de l'au moins une nervure supérieure (22, 24) de la portion de couronne supérieure à l'au moins une nervure inférieure (32, 34) de la portion de couronne inférieure et la formation d'un passage en labyrinthe entre l'extrémité libre (65) du montant supérieur et l'extrémité libre (75) du montant inférieur.

10. Procédé selon la revendication 9, incluant en outre l'extension de l'extrémité libre (65) du montant supérieur et de l'extrémité libre (75) du montant inférieur axialement au-delà l'une de l'autre.

11. Procédé selon la revendication 10, incluant en outre le maintien du montant supérieur (64) et du montant inférieur (74) dans une relation espacée l'un par rapport à l'autre.

12. Procédé selon la revendication 9, incluant en outre la formation d'une poche (90) s'étendant axialement à l'intérieur de l'extrémité libre (65) du montant supérieur et l'extension de l'extrémité libre (75) du montant inférieur axialement à l'intérieur de la poche.

13. Procédé selon la revendication 9, incluant en outre la formation d'un contre-alésage (76) dans l'extrémité libre (75) du montant inférieur et l'extension de l'extrémité libre (65) du montant supérieur axialement à l'intérieur du contre-alésage (76).

14. Procédé selon la revendication 9, incluant en outre la formation d'un premier passage d'écoulement d'huile (78) s'étendant le long de l'axe central dans le montant inférieur.

15. Procédé selon la revendication 14, incluant en outre la formation d'un second passage d'écoulement d'huile (80) s'étendant transversalement à l'axe central et le croisement du premier passage d'écoulement d'huile (78) avec le second passage d'écoulement d'huile.
